(19) Europäisches Patentamt
European Patent Office
Office européen des brevets

(11) **EP 1 985 470 B1**

(12) **FASCICULE DE BREVET EUROPEEN**

(45) Date de publication et mention de la délivrance du brevet:
**10.06.2015 Bulletin 2015/24**

(51) Int Cl.:
***B60C 19/00*** *(2006.01)*     ***B60C 5/02*** *(2006.01)*
***B29D 30/00*** *(2006.01)*

(21) Numéro de dépôt: **08154342.3**

(22) Date de dépôt: **10.04.2008**

(54) **Pneumatique comportant une couche alvéolaire**

Reifen mit einer Porenschicht

Tyre comprising an alveolate layer

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.04.2007 FR 0703117**

(43) Date de publication de la demande:
**29.10.2008 Bulletin 2008/44**

(73) Titulaires:
- **COMPAGNIE GENERALE DES ETABLISSEMENTS MICHELIN**
  **63000 Clermont-Ferrand (FR)**
- **Michelin Recherche et Technique S.A.**
  **1763 Granges-Paccot (CH)**

(72) Inventeur: **Merino, Jose**
**63200 RIOM (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**DE-A1- 4 001 753    DE-A1- 10 220 193**
**US-A- 4 392 522    US-A- 4 399 851**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine de l'invention

L'invention concerne un pneumatique dont le bruit de roulement est réduit dans le véhicule ce qui confère un confort amélioré.

### État de la technique

De nombreux bruits polluent l'environnement d'un véhicule. Certains sont dus aux pneumatiques. Parmi cette catégorie, une partie du spectre qui est particulièrement gênante est le mode de cavité. Le mode de cavité est la mise en résonance de la colonne de l'air interne du pneumatique.

La gamme de fréquences du bruit intérieur dans le véhicule qui sont en relation avec le pneumatique en roulage est de 80 à 500 Hz. La fréquence du mode de cavité est fonction de la dimension du pneumatique. A très faible vitesse, le pic du premier mode de cavité (PMC) est d'autour de 230 Hz.

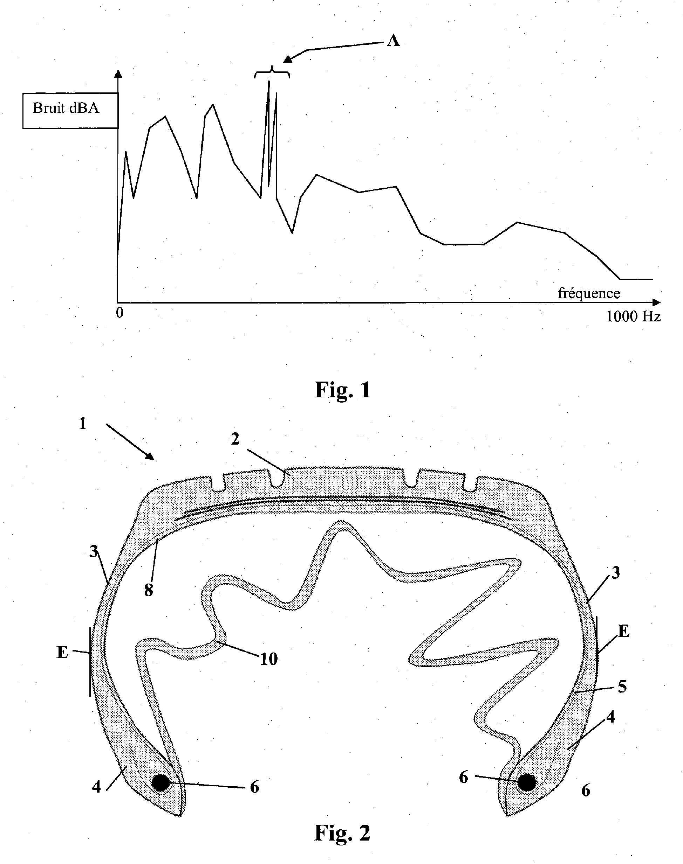

En roulage, deux pics apparaissent. A 80 km/h, les fréquences de ces pics sont de 210 et 250 Hz approximativement. La figure 1 montre bien ces fréquences. D'un point de vue du confort subjectif, les pics du PMC sont gênants car très audibles.

Il est connu que disposer des éléments mobiles à l'intérieur du pneumatique peut avoir un effet positif sur le bruit intérieur, amortissant en particulier le premier mode de cavité. Le document EP1214205 B1 illustre bien ce principe. Des particules de matériaux à cellules ouvertes sont disposées dans la cavité du pneumatique.

D'autres méthodes concernent des « poils » à l'intérieur de la cavité, par exemple tel que présenté dans le document US 6 343 843.

Autrement, le remplissage de la cavité par une mousse ou un autre matériau, tel que du sable est présenté dans le document US 2001/0004924.

US 4 252 378 décrit un agencement dans lequel la jante est remplie avec une mousse.

EP1510366 A1 décrit un agencement avec un corps amortissant le bruit disposé sous la zone du sommet.

Les systèmes précédents sont complexes et chers.

FR 2 233 194 décrit un pneumatique comportant sur sa paroi interne une couche de caoutchouc alvéolaire à cellules fermées et dont les cellules sont remplies d'un gaz sous pression.

DE 102 20 193 présente un pneumatique comportant une paroi disposée dans la cavité interne du pneumatique, liée aux deux bourrelets et non liée à la paroi interne ailleurs. Cette paroi comprend des microperforations et a pour objectif d'amortir le bruit.

### Description de l'invention

Pour pallier ces inconvénients, l'invention propose un pneumatique comportant au moins un sommet prolongé par deux flancs et deux bourrelets dont la base est destinée à être montée sur un siège de jante, une structure de renfort de type carcasse ancrée dans les deux bourrelets et une couche constituée d'un matériau alvéolaire disposée sur la paroi interne du pneumatique, **caractérisé en ce que** ladite couche alvéolaire est collée à la structure du pneumatique au plus sur 20 % de sa surface et non-collée en-dehors, et en ce que la longueur curviligne dans toute section axiale de la couche alvéolaire ($L_{ca}$) est supérieure à la longueur curviligne dans ladite section axiale de la paroi interne du pneumatique en contact avec ladite couche alvéolaire ($L_{pa}$).

Le fait que la couche alvéolaire ne soit pas collée au pneumatique sur l'ensemble de sa surface améliore de façon substantielle la réduction de bruit obtenue. Le gain en bruit est très significatif. L'impact est supérieur à 4 dBA dans les zones du spectre correspondant aux pics du premier mode de cavité (PMC) et aux fréquences entre 300 et 350 Hz relativement à un pneumatique sans couche alvéolaire « libre ».

L'effet sur le bruit est renforcé parce que la couche alvéolaire est grande par rapport au pneumatique, ce qui fait que, même après gonflage, la surface de la couche alvéolaire n'est pas tendue mais est repliée. Ces plis qui font que la géométrie de la cavité est moins « régulière » sont positifs dans l'absorption du bruit.

De façon avantageuse, la couche alvéolaire est collée au pneumatique par ses deux bords.

Et, de façon particulièrement avantageuse, la couche alvéolaire est collée au pneumatique au niveau des deux bourrelets.

Avantageusement, on a :

$$1,1 \prec L_{ca} \big/ L_{pa} \prec 2,5 \,.$$

La sur longueur dans toute section axiale renforce l'atténuation du bruit de roulement. Cet effet devient perceptible dès 10 % d'augmentation de longueur relativement à celle du pneumatique et au-delà d'un facteur 2,5, on constate que la couche alvéolaire devient trop lourde.

De même, la longueur curviligne dans toute section longitudinale de la couche alvéolaire ($L_{cl}$) est avantageusement supérieure à la longueur curviligne dans cette section longitudinale de la paroi interne du pneumatique en contact avec la couche alvéolaire ($L_{pl}$).

Avantageusement, on a :

$$1,1 \prec L_{cl} \big/ L_{pl} \prec 2,5 \,.$$

Selon un mode de réalisation avantageux, le matériau de la couche alvéolaire comprend du caoutchouc butyl.

Cela permet de fixer aisément la couche alvéolaire à la structure du pneumatique au moyen d'une couche additionnelle de caoutchouc butyl.

Des matériaux alvéolaires constitués de caoutchouc butyl sont bien connus dans l'état de la technique. A titre d'exemple on peut consulter les demandes EP1155801 B1 ou EP0912354 B1.

De préférence, la couche est à cellules majoritairement fermées.

Selon un autre mode de réalisation d'un pneumatique selon l'invention, la couche alvéolaire comporte une première couche non-alvéolaire et une seconde couche en matériau alvéolaire à cellules majoritairement fermées disposée le plus vers l'intérieur de la cavité du pneumatique.

Ce mode de réalisation a l'avantage de renforcer l'étanchéité à un gaz du pneumatique.

Selon un autre mode de réalisation, la couche alvéolaire comporte une première couche en matériau alvéolaire à cellules majoritairement fermées et une seconde couche en matériau alvéolaire à cellules ouvertes. Cette seconde couche peut être constituée d'une mousse de polyuréthanne mise en place dans le pneumatique après vulcanisation par exemple.

Le pneumatique selon l'invention peut avantageusement comporter en outre une couche étanche en matériau non-alvéolaire, fixée continûment à la structure du pneumatique et disposée entre la couche alvéolaire et la structure du pneumatique. Ce mode de réalisation donne une excellente étanchéité au gaz du pneumatique.

L'épaisseur de la couche alvéolaire peut être comprise entre 0,5 et 10 mm et de préférence entre 1 et 4 mm.

La densité de la couche alvéolaire peut être comprise entre 0,04 et 0,8 g/cm$^3$ et de préférence entre 0,06 et 0,3 g/cm$^3$.

L'invention a aussi pour objet un procédé de fabrication d'un pneumatique dans lequel :

- on dispose sur un tambour de fabrication une couche de matériau comportant un agent moussant ;
- on applique une bandelette de matériau de collage au niveau des bords de ladite couche ;
- on applique une couche de matériau constituant de la paroi interne du pneumatique, le matériau comportant un agent moussant étant incompatible chimiquement avec le matériau constituant de la paroi interne ;
- on achève la confection de la structure du pneumatique; et
- on vulcanise le pneumatique.

Ce procédé est particulièrement adapté dans le cas où la couche alvéolaire et la paroi interne du pneumatique en rapport sont incompatibles chimiquement. Il suffit alors de laisser la couche de matériau alvéolaire subir sa phase d'expansion au démoulage du pneumatique pour que les tensions internes produites par cette expansion rompent les liaisons créées pendant la vulcanisation entre la couche alvéolaire et la paroi du pneumatique en regard. La couche alvéolaire est donc alors complètement décollée du pneumatique en dehors des zones de collage, de préférence au niveau des deux bourrelets. C'est le cas lorsque la couche alvéolaire est constituée de caoutchouc butyl et la gomme étanche du pneumatique n'en comporte pas ou est absente. L'agent de collage dans les zones de collage est alors avantageusement constitué d'une bandelette comprenant du caoutchouc butyl sans agent moussant.

Lorsque il y a compatibilité chimique entre la couche alvéolaire et la paroi interne du pneumatique en regard, on utilise avantageusement un agent anti-collant tel du talc ou de la craie pour assurer la séparation de la couche alvéolaire de la paroi du pneumatique après la vulcanisation du pneumatique.

**Description brève des dessins**

Tous les détails de réalisation sont donnés dans la description qui suit, complétée par les figures 1 à 8, annexées à la présente, dans lesquelles:

- la figure 1 illustre le spectre type d'un véhicule roulant à 80 km/h ;
- la figure 2 illustre un exemple de pneumatique comportant une couche alvéolaire selon l'invention ;
- la figure 3 illustre le pneumatique de la figure 2 monté sur sa jante de service et gonflé;
- la figure 4 illustre graphiquement le gain obtenu avec une chambre selon l'invention ;
- la figure 5 illustre le procédé de collage de la couche alvéolaire sur un bourrelet;
- les figures 6, 7 et 8 donnent trois exemples d'agencements d'une couche alvéolaire.

**Description détaillée de modes de réalisation**

Dans ce qui suit, on entend par « section axiale » d'un pneumatique, toute section passant par l'axe de rotation du pneumatique ; et on entend par « section transversale » toute section perpendiculaire à l'axe de rotation du pneumatique.

La figure 1 présente un spectre type de l'amplitude du bruit en fonction de la fréquence mesuré dans un véhicule de tourisme roulant à 80 km/h. On note particulièrement les deux pics liés au premier mode de cavité autour de 230 Hz (flèche A). Ces deux pics sont très audibles et très gênants du point de vue du confort pour le conducteur ou un passager du véhicule.

La figure 2 présente un pneumatique 1 selon l'invention en section axiale. Ce pneumatique comprend un sommet 2, deux flancs 3 prolongés par deux bourrelets 4. Une structure de renfort de type carcasse 5 est ancrée dans les deux bourrelets 4 autour des tringles 6. Ce pneumatique comprend une couche alvéolaire 10 collée sur la paroi interne 8 du pneumatique au niveau des deux bourrelets 4 et décollée ailleurs, c'est-à-dire au niveau des flancs 3 et du sommet 2. La surface de collage de la couche alvéolaire représente une faible fraction de sa surface totale, moins de 20 %. Le lieu du collage de cette couche peut être disposé sur la paroi interne du pneumatique en toute zone des bourrelets ou des flancs jusqu'à l'équateur du pneumatique E. Une zone préférentielle est au niveau des bourrelets comme illustré à la figure 2. Cette couche 10 est une couche alvéolaire. C'est-à-dire qu'elle comporte des alvéoles internes, majoritairement fermées et remplies d'un gaz sous pression. De tels matériaux alvéolaires sont bien connus de l'homme du métier.

Cette couche alvéolaire est très majoritairement non-collée à la paroi interne 8 du pneumatique, cela lui permet d'avoir une action amortissante des pics du premier mode de cavité.

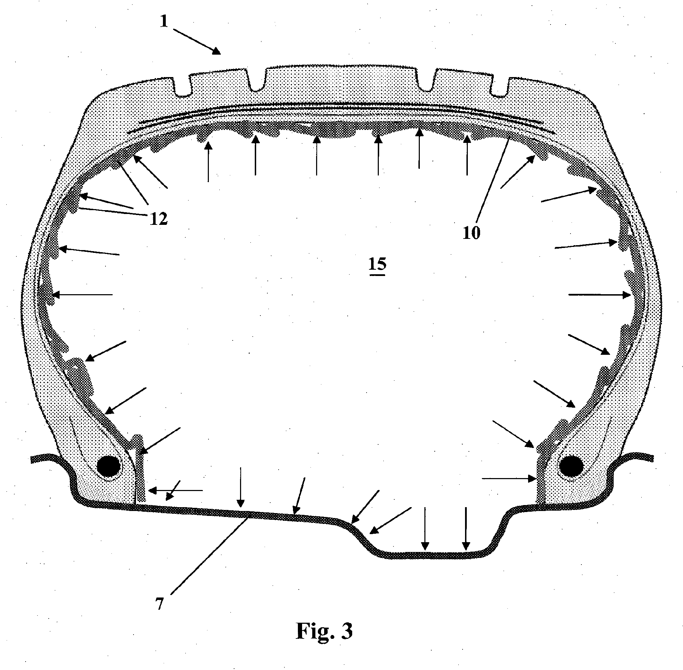

Une seconde caractéristique de cette couche alvéolaire 10 est que sa longueur curviligne dans toute section axiale et longitudinale du pneumatique est avantageusement supérieure à la longueur curviligne dans la même section axiale respectivement longitudinale de la paroi interne du pneumatique. Il en résulte que lorsque le pneumatique 1 selon l'invention est monté sur sa jante de service 7 et gonflé à sa pression de service, la couche additionnelle 10 est plaquée contre la paroi interne 8 du pneumatique en faisant des plis 12 tel qu'illustré à la figure 3. La présence de ces plis donne à la paroi de la cavité pressurisée du pneumatique 15 une surface irrégulière qui favorise l'amortissement des bruits de roulage. A la figure 3, les flèches illustrent l'action de la pression de gonflage sur la couche additionnelle et la paroi du pneumatique.

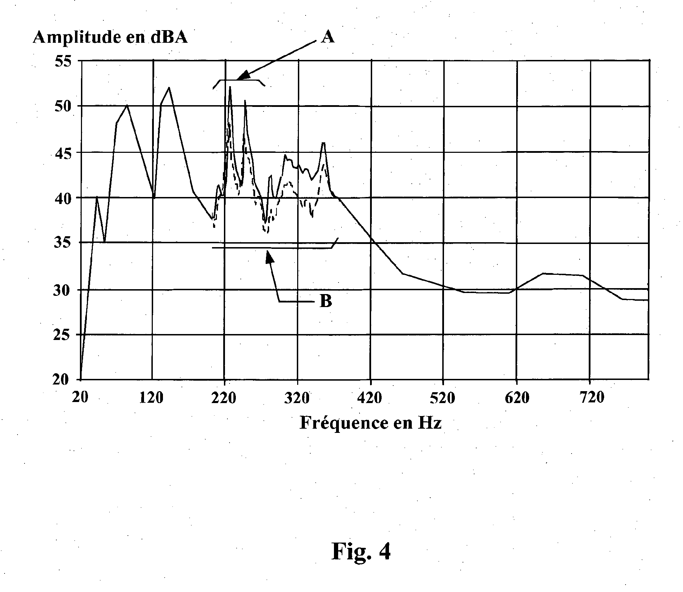

La figure 4 présente les résultats de mesure de bruit réalisés dans un véhicule roulant à 80 km/h sur un sol macro rugueux dans deux configurations :

- en trait plein : le véhicule est équipé de pneumatiques usuels gonflés à 2,3 bar ; et
- en trait pointillé : le même véhicule est équipé de pneumatiques selon l'invention comportant une couche additionnelle alvéolaire décollée majoritairement de la paroi interne 8 du pneumatique.

On note particulièrement un gain de 5 dBA sur les deux pics du premier mode de cavité (flèche A). Plus globalement, on note un gain de 3 à 5 dBA dans la gamme de fréquences [180 - 350] Hz, gamme de fréquence particulièrement sensible pour le confort (flèche B).

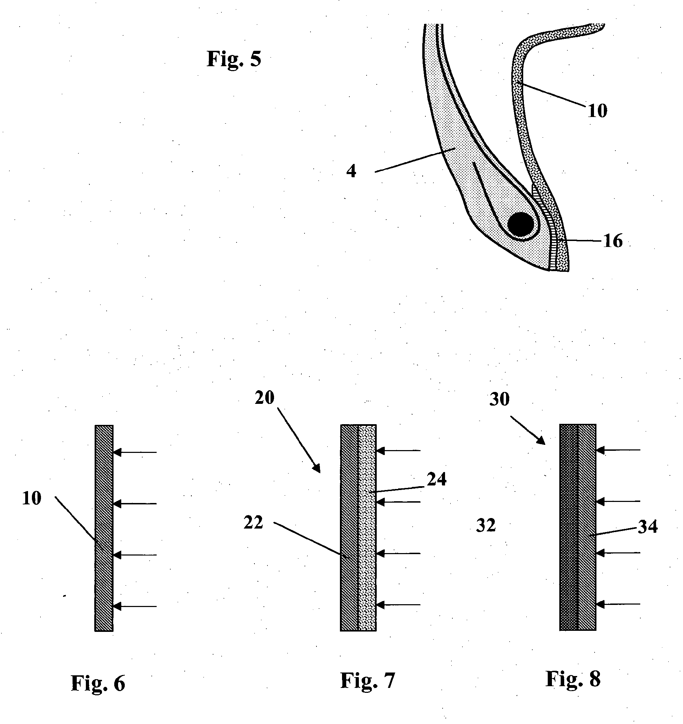

La figure 5 illustre la fixation de la couche alvéolaire 10 sur la paroi interne du bourrelet 4. Cette fixation est assurée par la présence d'une couche 16 de matériau de collage.

Dans le cas préférentiel où la couche alvéolaire comprend du caoutchouc butyl, la couche 16 peut simplement être une couche de matériau butyl ne comportant pas d'agent moussant.

La figure 6 présente un mode de réalisation particulièrement simple de la couche alvéolaire 10. Cette couche alvéolaire est constituée d'un matériau alvéolaire à alvéoles majoritairement fermées. Un exemple d'un tel matériau est décrit dans le document déjà cité EP 1 214 205 B1 des demanderesses.

La figure 7 présente un second mode de réalisation d'une couche alvéolaire selon l'invention 20. Cette couche alvéolaire est constituée d'une première couche alvéolaire à alvéoles majoritairement fermées 22, de préférence réalisée avec un caoutchouc butyl comportant un agent moussant, et d'une seconde couche alvéolaire à alvéoles majoritairement ouvertes 24. Cette seconde couche 24 peut être constituée en mousse de polyuréthanne et collée sur la surface de la couche 22 après la vulcanisation du pneumatique et l'extension de la couche 22. Une solution alternative est de modifier les quantités d'agent moussant dans une couche de matériau butyl pour donner après extension une majorité d'alvéoles ouvertes. La couche 24, comme l'indiquent les flèches, est disposée vers l'intérieur de la cavité pressurisée du pneumatique.

La figure 8 présente une troisième solution de couche alvéolaire 30. Cette couche 30 comprend une première couche de gomme étanche non alvéolaire 32 et une seconde couche de gomme alvéolaire 34 en contact avec l'air de gonflage. De préférence les deux couches 32 et 34 sont réalisées à partir d'un caoutchouc butyl sans agent moussant pour la couche 32 et avec agent moussant pour la couche 34. L'intérêt de cette solution est de garantir une excellente étanchéité aux gaz de la couche alvéolaire 30.

Les épaisseurs de la couche alvéolaire sont préférentiellement comprises entre 1 et 4 mm selon les applications.

La densité de la mousse peut aller de 0.04 gr/cm3 à 0.8 gr/cm$^3$. L'optimum entre la qualité d'absorption et la masse de l'ensemble monté est entre 0.06 et 0.3 gr/cm$^3$.

Le pneumatique illustré aux figures 2, 3, 5 et 6 comporte une couche alvéolaire en caoutchouc butyl et pas de couche étanche fixée continûment à la structure du pneumatique. Ce pneumatique est aisément réalisé en appliquant sur un tambour de fabrication usuel une première couche de caoutchouc butyl comportant un agent moussant, puis deux bandelettes de caoutchouc butyl sans agent moussant au niveau des bords de la couche précédente, en appliquant ensuite comme usuellement tous les autres constituants du pneumatique puis en le vulcanisant. Après la vulcanisation, les particules de gaz libérées par la chaleur entraînent une expansion de la couche alvéolaire telle que ses dimensions axiales et longitudinales correspondent à ce qui est demandé pour obtenir une absorption satisfaisante du bruit de roulage. La couche alvéolaire a alors une épaisseur et une densité appropriées pour aussi assurer une étanchéité suffisante vis-à-vis des gaz.

Lorsque le pneumatique comporte une couche étanche additionnelle comportant du butyl par exemple, il convient d'ajouter un agent anti-collage pour garantir le décollage effectif de la couche alvéolaire de la paroi en regard du pneumatique lors de la phase d'expansion de la couche alvéolaire.

L'invention n'est pas limitée aux exemples décrits et représentés et diverses modifications peuvent y être apportées sans sortir de son cadre défini par les revendications annexées.

## Revendications

1. Pneumatique comportant au moins un sommet prolongé par deux flancs et deux bourrelets dont la base est destinée à être montée sur un siège de jante, une structure de renfort de type carcasse ancrée dans les deux bourrelets et une couche constituée d'un matériau alvéolaire disposée sur la paroi interne du pneumatique, **caractérisé en ce que** ladite couche alvéolaire est collée à la structure du pneumatique au plus sur 20 % de sa surface et non-collée en-dehors, et **en ce que** la longueur curviligne dans toute section axiale de la couche alvéolaire ($L_{ca}$) est supérieure à la longueur curviligne dans ladite section axiale de la paroi interne du pneumatique en contact avec ladite couche alvéolaire ($L_{pa}$).

2. Pneumatique selon la revendication 1, dans lequel ladite couche alvéolaire est liée au pneumatique par ses deux bords.

3. Pneumatique selon l'une des revendications 1 et 2, dans lequel ladite couche alvéolaire est fixée au pneumatique au niveau des deux bourrelets.

4. Pneumatique selon l'une des revendications 1 à 3, dans lequel on a :

$$1,1 \prec \frac{L_{ca}}{L_{pa}} \prec 2,5$$

5. Pneumatique selon l'une des revendications 1 à 4, dans lequel la longueur curviligne dans toute section longitudinale de la couche alvéolaire ($L_{cl}$) est supérieure à la longueur curviligne dans ladite section longitudinale de la paroi interne du pneumatique en contact avec ladite couche alvéolaire ($L_{pr}$).

6. Pneumatique selon la revendication 5, dans lequel on a :

$$1,1 \prec \frac{L_{cl}}{L_{pl}} \prec 2,5$$

7. Pneumatique selon l'une quelconque des revendications 1 à 6, dans lequel la couche alvéolaire comprend du caoutchouc butyl.

8. Pneumatique selon la revendication 7, dans lequel la couche alvéolaire est fixée à la structure du pneumatique au moyen d'une couche additionnelle de caoutchouc butyl.

9. Pneumatique selon l'une quelconque des revendications 1 à 8, dans lequel la couche alvéolaire est une couche alvéolaire à cellules majoritairement fermées.

10. Pneumatique selon l'une quelconque des revendications 1 à 8, dans lequel la couche alvéolaire comporte une première couche non-alvéolaire et une seconde couche en matériau alvéolaire à cellules majoritairement fermées disposée le plus vers l'intérieur de la cavité du pneumatique.

11. Pneumatique selon l'une quelconque des revendications 1 à 8, dans lequel la couche alvéolaire comporte une première couche en matériau alvéolaire à cellules majoritairement fermées et une seconde couche en matériau alvéolaire à cellules ouvertes.

12. Pneumatique selon l'une quelconque des revendications 1 à 11, comportant en outre une couche étanche en matériau non-alvéolaire, fixée continûment à la structure du pneumatique et disposée entre la couche alvéolaire et ladite structure du pneumatique.

13. Pneumatique selon l'une quelconque des revendications 1 à 12, dans lequel l'épaisseur de la couche alvéolaire est comprise entre 0,5 et 10 mm.

14. Pneumatique selon la revendication 13, dans lequel l'épaisseur de la couche alvéolaire est comprise entre 1 et 4 mm.

15. Pneumatique selon l'une quelconque des revendications 1 à 14, dans lequel la densité de la couche alvéolaire est comprise entre 0,04 et 0,8 g/cm$^3$.

16. Pneumatique selon la revendication 15, dans lequel la densité de la couche alvéolaire est comprise entre 0,06 et 0,3 g/cm$^3$.

17. Procédé de fabrication d'un pneumatique, dans lequel :

   - on dispose sur un tambour de fabrication une couche de matériau comportant un agent moussant ;

- on applique une bandelette de matériau de collage au niveau des bords de ladite couche ;
- on applique une couche de matériau constituant de la paroi interne du pneumatique, ledit matériau comportant un agent moussant étant incompatible chimiquement avec le matériau constituant de la paroi interne ;
- on achève la confection de la structure du pneumatique ;
- on vulcanise le pneumatique ; et.
- on laisse s'opérer la phase d'expansion de la couche de matériau alvéolaire à pression ambiante.

18. Procédé de fabrication d'un pneumatique, dans lequel :

- on dispose sur un tambour de fabrication une couche de matériau comportant un agent moussant ;
- on dispose un agent anti-collant au niveau des zones de ladite couche destinées à ne pas être fixées à la structure du pneumatique ;
- on applique une couche de matériau étanche ;
- on achève la confection de la structure du pneumatique ;
- on vulcanise le pneumatique ; et.
- on laisse s'opérer la phase d'expansion de la couche de matériau alvéolaire à pression ambiante.

19. Procédé selon la revendication 18, dans lequel l'agent anti-collant est du talc ou de la craie.

**Patentansprüche**

1. Luftreifen, der mindestens einen Scheitel verlängert durch zwei Flanken und zwei Wülste, deren Basis dazu bestimmt ist, auf einen Felgensitz montiert zu werden, eine Verstärkungsstruktur von der Art Karkasse, die in den zwei Wülsten verankert ist, und eine aus einem Material mit Zellenstruktur bestehende Schicht aufweist, die auf der Innenwand des Luftreifens angeordnet ist, **dadurch gekennzeichnet, dass** die Schicht mit Zellenstruktur an die Struktur des Luftreifens höchstens über 20 % ihrer Fläche geklebt und außerhalb nicht geklebt ist, und dass die krummlinige Länge in jedem Axialschnitt der Schicht mit Zellenstruktur ($L_{ca}$) größer als die krummlinige Länge in dem Axialschnitt der Innenwand des Luftreifens in Kontakt mit der Schicht mit Zellenstruktur ($L_{pa}$) ist.

2. Luftreifen nach Anspruch 1, wobei die Schicht mit Zellenstruktur mit dem Luftreifen über ihre zwei Ränder verbunden ist.

3. Luftreifen nach einem der Ansprüche 1 und 2, wobei die Schicht mit Zellenstruktur am Luftreifen im Bereich der zwei Wülste befestigt ist.

4. Luftreifen nach einem der Ansprüche 1 bis 3, wobei gilt:

$$1{,}1 \prec {L_{ca}}\Big/{L_{pa}} \prec 2{,}5$$

5. Luftreifen nach einem der Ansprüche 1 bis 4, wobei die krummlinige Länge in jedem Längsschnitt der Schicht mit Zellenstruktur ($L_{cl}$) größer als die krummlinige Länge in dem Längsschnitt der Innenwand des Luftreifens in Kontakt mit der Schicht mit Zellenstruktur ($L_{pl}$) ist.

6. Luftreifen nach Anspruch 5, wobei gilt:

$$1{,}1 \prec {L_{cl}}\Big/{L_{pl}} \prec 2{,}5$$

7. Luftreifen nach einem der Ansprüche 1 bis 6, wobei die Schicht mit Zellenstruktur Butylkautschuk enthält.

8. Luftreifen nach Anspruch 7, wobei die Schicht mit Zellenstruktur an der Struktur des Luftreifens mittels eines zusätzlichen Schicht aus Butylkautschuk befestigt ist.

9. Luftreifen nach einem der Ansprüche 1 bis 8, wobei die Schicht mit Zellenstruktur eine Schicht mit Zellenstruktur mit hauptsächlich geschlossenen Zellen ist.

10. Luftreifen nach einem der Ansprüche 1 bis 8, wobei die Schicht mit Zellenstruktur eine erste Schicht ohne Zellenstruktur und eine zweite Schicht aus Material mit Zellenstruktur mit hauptsächlich geschlossenen Zellen aufweist, die am weitesten innen im Hohlraum des Luftreifens angeordnet ist.

11. Luftreifen nach einem der Ansprüche 1 bis 8, wobei die Schicht mit Zellenstruktur eine erste Schicht aus Material mit Zellenstruktur mit mehrheitlich geschlossenen Zellen und eine zweite Schicht aus Material mit Zellenstruktur mit offenen Zellen aufweist.

12. Luftreifen nach einem der Ansprüche 1 bis 11, der außerdem eine dichte Schicht aus Material ohne Zellenstruktur aufweist, die durchgehend an der Struktur des Luftreifens befestigt und zwischen der Schicht mit Zellenstruktur und der Struktur des Luftreifens angeordnet ist.

13. Luftreifen nach einem der Ansprüche 1 bis 12, wobei die Dicke der Schicht mit Zellenstruktur zwischen 0,5 und 10 mm liegt.

14. Luftreifen nach Anspruch 13, wobei die Dicke der Schicht mit Zellenstruktur zwischen 1 und 4 mm liegt.

15. Luftreifen nach einem der Ansprüche 1 bis 14, wobei die Dichte der Schicht mit Zellenstruktur zwischen 0,04 und 0,8 g/cm$^3$ liegt.

16. Luftreifen nach Anspruch 15, wobei die Dichte der Schicht mit Zellenstruktur zwischen 0,06 und 0,3 g/cm$^3$ liegt.

17. Verfahren zur Herstellung eines Luftreifens, wobei:

- auf einer Fertigungstrommel eine Schicht eines einen Schaumbildner aufweisenden Materials angeordnet wird;
- ein Streifen aus Klebematerial im Bereich der Ränder der Schicht aufgebracht wird;
- eine Schicht eines Materials aufgebracht wird, das Bestandteil der Innenwand des Luftreifens ist, wobei das einen Schaumbildner aufweisende Material chemisch mit dem Material, das Bestandteil der Innenwand ist, nicht kompatibel ist;
- der Aufbau der Struktur des Luftreifens beendet wird;
- der Luftreifen vulkanisiert wird; und
- die Expansionsphase der Schicht aus Material mit Zellenstruktur bei Umgebungsdruck stattfinden gelassen wird.

18. Verfahren zur Herstellung eines Luftreifens, wobei:

- auf einer Fertigungstrommel eine Schicht eines einen Schaumbildner aufweisenden Materials angeordnet wird;
- ein Antihaftmittel im Bereich der Zonen der Schicht angeordnet wird, die dazu bestimmt sind, nicht an der Struktur des Luftreifens befestigt zu werden;
- eine Schicht eines dichten Materials aufgebracht wird;
- der Aufbau der Struktur des Luftreifens beendet wird;
- der Luftreifen vulkanisiert wird; und
- die Expansionsphase der Schicht aus Material mit Zellenstruktur bei Umgebungsdruck stattfinden gelassen wird.

19. Verfahren nach Anspruch 18, wobei das Antihaftmittel Talkum oder Kreide ist.

**Claims**

1. Tire comprising at least one crown extended by two sidewalls and two beads, the base of which adapted for mounting onto a rim seat, a carcass-type reinforcing structure anchored into the two beads and a layer composed of a cellular material positioned on the inner wall of the tire, **characterized in that** said cellular layer is bonded to the tire structure at most over 20% of its surface and the rest is not bonded, and **in that** the curved length in any axial cross section of the cellular layer ($L_{ca}$) is greater than the curved length in said axial cross section of the inner wall of the tire in contact with said cellular layer ($L_{pa}$).

2. Tire according to Claim 1, in which said cellular layer is bonded to the tire by its two edges.

3. Tire according to either of Claims 1 and 2, in which said cellular layer is attached to the tire at the two beads.

4. Tire according to one of Claims 1 to 3, in which:

$$1.1 \prec \frac{L_{ca}}{L_{pa}} \prec 2.5 .$$

5. Tire according to one of Claims 1 to 4, in which the curved length in any longitudinal cross section of the cellular layer ($L_{cl}$) is greater than the curved length in said longitudinal cross section of the inner wall of the tire in contact with said cellular layer ($L_{pl}$).

6. Tire according to Claim 5, in which:

$$1.1 \prec \frac{L_{cl}}{L_{pl}} \prec 2.5 .$$

7. Tire according to any one of Claims 1 to 6, in which the cellular layer comprises butyl rubber.

8. Tire according to Claim 7, in which the cellular layer is attached to the tire structure by means of an additional layer of butyl rubber.

9. Tire according to any one of Claims 1 to 8, in which the cellular layer is a predominantly closed-cell cellular layer.

**10.** Tire according to any one of Claims 1 to 8, in which the cellular layer comprises a first non-cellular layer and a second layer made of a predominantly closed-cell cellular material positioned on the innermost side of the tire cavity.

**11.** Tire according to any one of Claims 1 to 8, in which the cellular layer comprises a first layer made of a predominantly closed-cell cellular material and a second layer made of an open-cell cellular material.

**12.** Tire according to any one of Claims 1 to 11, additionally comprising an airtight layer made of a non-cellular material, continuously attached to the tire structure and positioned between the cellular layer and said tire structure.

**13.** Tire according to any one of Claims 1 to 12, in which the thickness of the cellular layer is between 0.5 and 10 mm.

**14.** Tire according to Claim 13, in which the thickness of the cellular layer is between 1 and 4 mm.

**15.** Tire according to any one of Claims 1 to 14, in which the density of the cellular layer is between 0.04 and 0.8 $g/cm^3$.

**16.** Tire according to Claim 15, in which the density of the cellular layer is between 0.06 and 0.3 $g/cm^3$.

**17.** Process for manufacturing a tire, comprising:

 - placing on a manufacturing drum a layer of material comprising a foaming agent;
 - applying to the edges of said layer a strip of bonding material;
 - applying a layer of material that constitutes the inner wall of the tire, said material comprising a foaming agent being chemically incompatible with the material that constitutes the inner wall;
 - completing the preparation of the tire structure;
 - vulcanizing the tire; and
 - leaving the expansion phase of the layer of cellular material to take place at ambient pressure.

**18.** Process for manufacturing a tire, comprising:

 - placing on a manufacturing drum a layer of material comprising a foaming agent;
 - placing an anti-tack agent in the zones of said layer intended not to be attached to the tire structure;
 - applying a layer of airtight material;
 - completing the preparation of the tire structure;
 - vulcanizing the tire; and
 - leaving the expansion phase of the layer of cellular material to take place at ambient pressure.

**19.** Process according to Claim 18, in which the anti-tack agent is talc or chalk.

**Fig. 1**

**Fig. 2**

Fig. 3

Fig. 4

**Fig. 5**

4

10

16

20

10

Fig. 6

22

24

Fig. 7

30

32

34

Fig. 8

**EP 1 985 470 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1214205 B1
- US 6343843 B
- US 20010004924 A
- US 4252378 A
- EP 1510366 A1
- FR 2233194
- DE 10220193
- EP 1155801 B1
- EP 0912354 B1